# EUROPEAN PATENT APPLICATION

(11) **EP 2 963 900 A1**
(43) Date of publication of application: **06.01.2016**
(21) Application number: 14175004.2
(22) Date of filing: 30.06.2014
(51) Int. Cl.: H04L 29/12

(54) **Method, apparatus and computer program for operating a data directory**

(71) Applicant: Nokia Solutions and Networks Oy, 02610 Espoo (FI)
(72) Inventor: The designation of the inventor has not yet been filed
(74) Representative: Borgström, Markus

(57) **Abstract**

A method comprising: providing an association in a data directory, said association for locating data in said data directory; and modifying said association in response to a request for data from said directory, to provide a modified association.

## Description

The present invention relates to a method, computer program and apparatus for operating a data directory.

### Background

A communication system can be seen as a facility that enables communication sessions between two or more entities such as fixed or mobile communication devices, base stations, servers and/or other communication nodes. A communication system and compatible communicating entities typically operate in accordance with a given standard or specification which sets out what the various entities associated with the system are permitted to do and how that should be achieved. For example, the standards, specifications and related protocols can define the manner how various aspects of communication shall be implemented between communicating devices. A communication can be carried on wired or wireless carriers. In a wireless communication system at least a part of communications between stations occurs over a wireless link.

Examples of wireless systems include public land mobile networks (PLMN) such as cellular networks, satellite based communication systems and different wireless local networks, for example wireless local area networks (WLAN). A wireless system can be divided into cells or other radio coverage or service areas. A radio service area is provided by a station. Radio service areas can overlap, and thus a communication device in an area can typically send signals to and receive signals from more than one station.

A user can access the communication system by means of an appropriate communication device. A communication device of a user is often referred to as user equipment (UE) or terminal. A communication device is provided with an appropriate signal receiving and transmitting arrangement for enabling communications with other parties. Typically a communication device is used for enabling receiving and transmission of communications such as speech and data. In wireless systems a communication device provides a transceiver station that can communicate with another communication device such as e.g. a base station and/or another user equipment. The communication device may access a carrier provided by a station, for example a base station, and transmit and/or receive communications on the carrier.

An example of communication systems is an architecture that is being standardized by the 3rd Generation Partnership Project (3GPP). This system is often referred to as the Universal Mobile Telecommunications System (UMTS) radio-access technology. The UMTS may incorporate Wideband Code Division Multiple Access (WCDMA) technology. The various development stages of the 3GPP specifications are referred to as releases.

A communication system can comprise different types of radio service areas providing transmission/reception points for the users. For example, the transmission/reception points can comprise wide area network nodes such as a macro Node-B (NB) which may, for example, provide coverage for an entire cell or similar radio service area. Network nodes can also be small or local radio service area network nodes, for example Home NBs (HNB), pico Node-Bs (pico-NB), or femto nodes.

In a telecommunications network there is a need to identify UEs and their status. To this end, subscriber profile data can be used to support network functions such as mobility, authentication, session management, etc. Some network models use a centralised subscriber profile store as a service to support data less network applications.

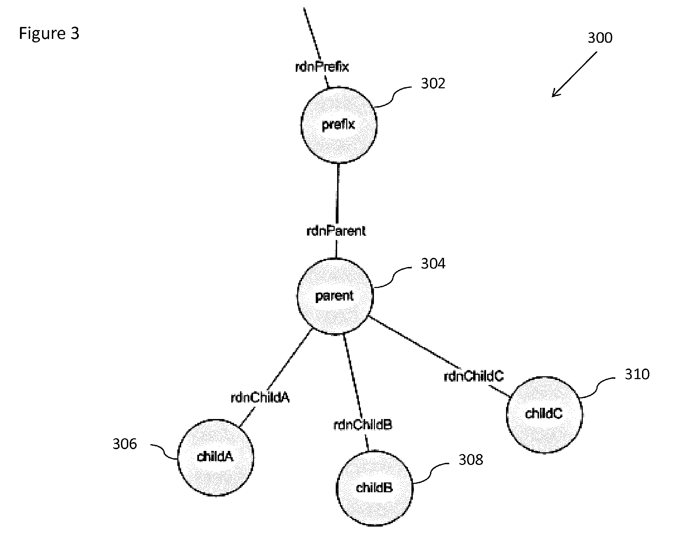

The so-called X.500 Directory, together with Lightweight Directory Access Protocol (LDAP), provides a framework for a centralised subscriber profile store. The data held within an X.500 directory is structured as a tree of data objects, the Directory Information Tree (DIT). Subscriber profiles can be represented as sub trees within the DIT. This is discussed in more detail below with respect to Figure 3.

### Summary

In a first aspect there is provided a method comprising: providing an association in a data directory, said association for locating data in said data directory; and modifying said association in response to a request for data from said directory, to provide a modified association.

In some embodiments, said association comprises at least one attribute.

In some embodiments, said association comprises at least one value.

In some embodiments, said modification of said association is temporary.

In some embodiments, said modified association is determined using an identifier of said requested data.

In some embodiments, said identifier comprises a Distinguished Name of said data to be located.

In some embodiments, the method comprises adding data to a location in said directory.

In some embodiments, the method comprises moving data from a first location in said directory to a second location in said directory.

In some embodiments, the method comprises using said modified association to obtain said requested data.

In some embodiments, said directory comprises an X.500 Directory.

In some embodiments, said association is between a parent entry and a child entry in said directory.

In some embodiments, said directory comprises a plurality of Directory System Agents.

In some embodiments, said association is partitioned over at least two of said Directory System Agents.

In some embodiments, said association comprises a Directory System Agent Specific Entry.

In a second aspect there is provided a computer program comprising computer executable instructions which when run on one or more processors perform the method of the first aspect.

In a third aspect there is provided an apparatus comprising: at least one processor; and at least one memory including computer program code; the at least one memory and the computer program code configured to, with the at least one processor, cause the apparatus at least to: provide an association in a data directory, said association for locating data in said data directory; and modify said association in response to a request for data from said directory, to provide a modified association.

In some embodiments, said association comprises at least one attribute.

In some embodiments, said association comprises at least one value.

In some embodiments, said apparatus is configured to temporarily modify said association.

In some embodiments, said apparatus is configured to use an identifier of said requested data to determine said modified association.

In some embodiments, said identifier comprises a Distinguished Name of said data to be located.

In some embodiments, said apparatus is configured to add data to a location in said directory.

In some embodiments, the apparatus is configured to move data from a first location in said directory to a second location in said directory.

In some embodiments, the apparatus is configured to use said modified association to obtain said requested data.

In some embodiments, said directory comprises an X.500 Directory.

In some embodiments, said association is between a parent entry and a child entry in said directory.

In some embodiments, said directory comprises a plurality of Directory System Agents.

In some embodiments, said apparatus is configured to partition said association over at least two of said Directory System Agents.

In some embodiments, said association comprises a Directory System Agent Specific Entry.

In a fourth aspect there is provided an apparatus comprising means for providing an association in a data directory, said association for locating data in said data directory; and means for modifying said association in response to a request for data from said directory, to provide a modified association.

In some embodiments, said association comprises at least one attribute.

In some embodiments, said association comprises at least one value.

In some embodiments, said apparatus comprises means for temporarily modifying said association.

In some embodiments, said apparatus comprises means for using an identifier of said requested data to determine said modified association.

In some embodiments, said identifier comprises a Distinguished Name of said data to be located.

In some embodiments, said apparatus comprises means for adding data to a location in said directory.

In some embodiments, the apparatus comprises means for moving data from a first location in said directory to a second location in said directory.

In some embodiments, the apparatus comprises means for using said modified association to obtain said requested data.

In some embodiments, said directory comprises an X.500 Directory.

In some embodiments, said association is between a parent entry and a child entry in said directory.

In some embodiments, said directory comprises a plurality of Directory System Agents.

In some embodiments, said apparatus comprises means for partitioning said association over at least two of said Directory System Agents.

In some embodiments, said association comprises a Directory System Agent Specific Entry.

### Brief description of drawings

Figure 1 shows a schematic overview of a network;
Figure 2 shows a schematic diagram of a control apparatus according to some embodiments;
Figure 3 is a schematic diagram of an example of a Directory Information Tree;
Figure 4 is a schematic diagram of an example of a Directory Information Tree which is partitioned across multiple DSAs;
Figure 5 is a schematic diagram of an example of a Directory Information Tree which is partitioned across multiple DSAs according to an embodiment.

### Detailed description

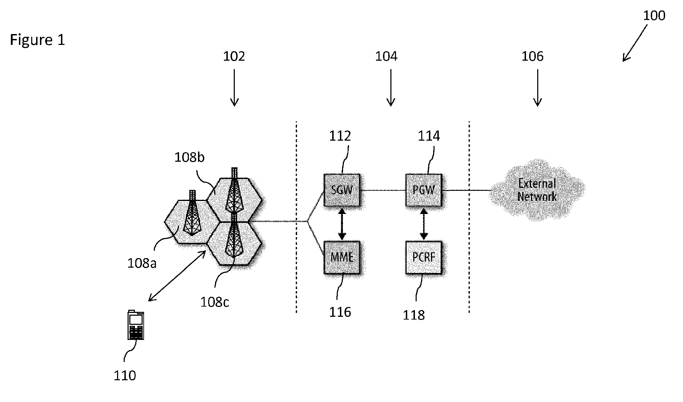

Figure 1 shows a schematic overview of a communication network 100. The communication network comprises a radio access network (RAN) 102, a core network (CN) 104, and an external network (such as the internet) 106.

In the core network base stations 108a, 108b, and 108c provide coverage for respective cells. A user equipment 110 can be in communication with one or more of base stations 108a to c.

The base stations provide a link between the UE 110 and the core network 104. In this example the core network 104 comprises a serving gateway 112, a packet data network gateway (PGW) 114, a mobile management entity (MME) 116, and a policy and charging rules function (PCRF) 118. The core network 104 is in communication with an external network 106, such as the Internet.

As discussed above, it is necessary to store subscriber information relating to, for example, a user equipment 110. Subscriber information may be stored in a network node, for example in the form of an X.500 Directory.

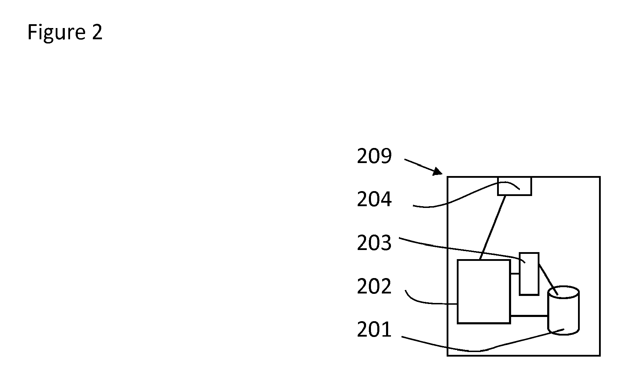

Figure 2 shows a schematic diagram of parts of a control apparatus suitable for storing and/or communicating with an X.500 Directory.

For these purposes the control apparatus 209 comprises at least one memory 201, at least one data processing unit 202, 203 and an input/output interface 204. Via the interface the control apparatus can be coupled to a receiver and a transmitter of a base station or other network node. The control apparatus 209 can be configured to execute an appropriate software code to provide the control functions. It shall be appreciated that similar components can be provided in a control apparatus provided elsewhere in the system for controlling reception of sufficient information for decoding of received information blocks.

Subscriber information may be required for a number of reasons. For example MME 116 may need to update location information of a subscriber. PCRF 118 may need subscriber information for charging purposes. It will be appreciated that a structure is required that enables this subscriber information to be obtained reliably and efficiently.

To this end a network architecture may employ an X.500 Directory for storing subscriber information. The X.500 Directory could also be used for storing other information in addition to subscriber information. Reference is made to the X.500 standards (e.g. ISO/IEC 9594-1) for details of the X.500 Directory system. For clarity some aspects of the X.500 Directory are simplified in this application for ease of understanding.

In order to meet capacity requirements, for certain deployments it is necessary to store information (e.g. subscriber information) across a plurality of nodes in a distributed manner. Each node is termed a Directory System Agent (DSA), and the DSAs cooperate to collectively provide the Directory service. Data held within the Directory is structured as a tree of data objects, known as a Directory Information Tree (DIT). A simplified version of a DIT is shown in Figure 3.

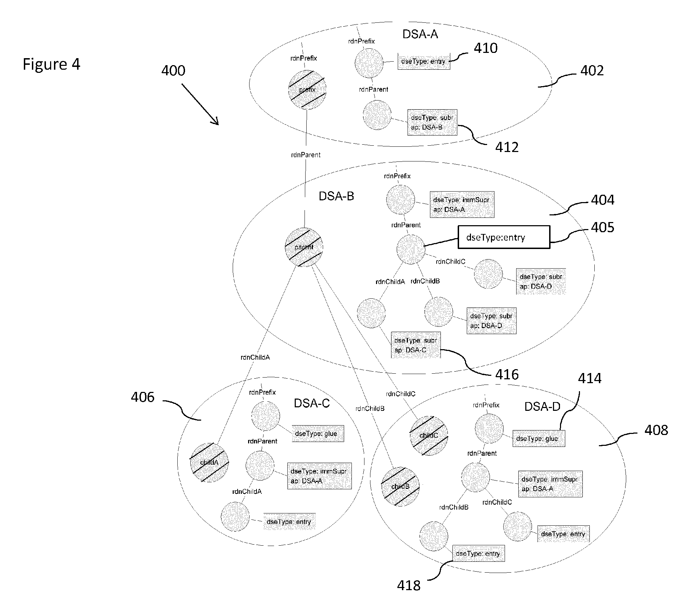

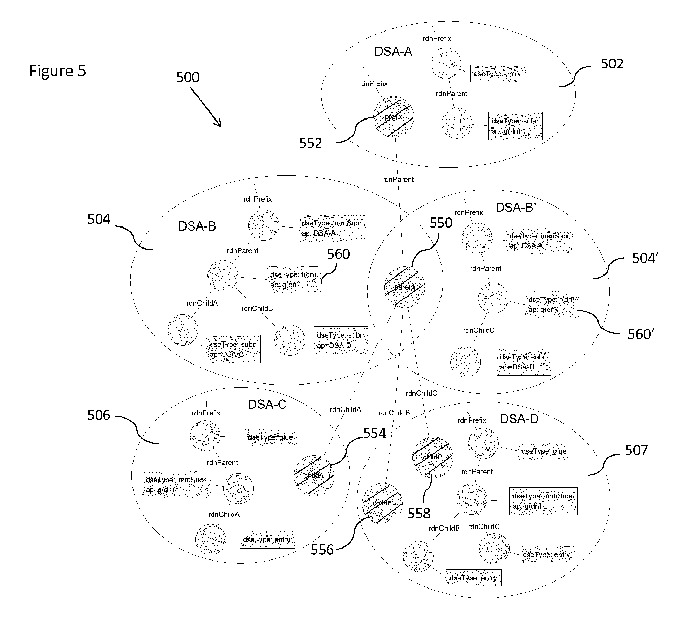

As also shown in Figures 4 and 5 (discussed further below), the DIT can be partitioned across multiple DSAs. Since the DIT itself is hierarchical, DSAs may also be structured in a hierarchical manner. However, the hierarchical structure of DSAs is not intrinsic to the specification or operation of the X.500 protocol, rather it is a typical pattern that is followed.

In the X.500 model, each DSA may act as an autonomous directory service provider, and be responsible for a part or parts of the overall DIT. Where a DSA has responsibility, the DSA stores the complete information for a particular entry, for example the attributes making up the individual entries in that part of the DIT. At the edges of areas of responsibility, the DSA stores references to the other DSAs which have the responsibilities in the adjacent areas.

If a DSA receives a request targeted at an entry within its area of responsibility (e.g. a request for subscriber information), the DSA may handle that request directly. Otherwise, the DSA may forward (chain) the request onto a DSA that can better handle the request. As part of this the original DSA may try to resolve as much of the target name as possible from its own dataset, and then use further reference information located at the edge, which may be provided by a further DSA. This process involving cooperating DSAs is defined within X.500 as a distributed procedure - the "name resolution procedure".

In an X.500 Directory, chaining or forwarding between DSAs is achieved by an X.500 protocol - the Directory System Protocol (DSP). Maintenance of the references between DSAs is also achieved by an X.500 protocol - the Directory Operational Binding Management Protocol (DOP).

Each DSA has a dataset comprising the objects it needs to support the overall distributed directory operation. These objects are called DSA Specific Entries (DSEs), and are arranged in a tree which represents the part of the DIT known to that DSA. The DSE tree overlaps that part of the DIT for which the DSA is responsible.

Referring back to Figure 3, the DIT 300 comprises a prefix entry 302, a parent entry 304, and child entries 306 (child A), 308 (child B), and 310 (child C). The example DIT 300 therefore provides a layered or hierarchical structure, whereby the DIT can be navigated by chaining RDNs of the branches of the tree. For example, to navigate to child A, the information rdnPrefix, rdnParent, rdnChildA is used. This may be done in order to obtain information from, or add information to, the child A entry, for example.

By way of explanation an "entry" (or "directory entry" or "DIT entry") is a part of the DIT i.e. as represented by the circles in Figure 3. A DSE is the representation of a DIT entry as held by a DSA. Therefore the DSE may provide an association between entries in the DIT. Each DSA may have its own representation of the DIT entries of which it is aware. A DSE comprises one or more attributes. An attribute comprises a name (to identify it), and one or more values.

Each entry in the DIT is uniquely identified relative to its parent by a Relative Distinguished Name (RDN), which is comprised of one or more of the attributes of the entry. An attribute represents explicit information held within the Directory. An attribute comprises a name and one or more values e.g. "MSISDN = +4412345678" (the attribute name being the MSISDN, and the value being the phone number).

In the case of multi-valued attributes, only one value can be part of the RDN. In Figure 3 the RDN of an entry is shown as the label of the arc to the entry from its parent entry (or just into the entry in the case of the prefix entry). The RDN is the subset of the attributes of the entry which uniquely identify a child entry relative to a parent entry i.e. no other child of the parent has the same set of values of those attributes. In Figure 3 the RDNs are represented as the labels of the lines between the entries, for example the line between entry "prefix" and entry "parent" is labelled with "rdnParent"; so "rdnParent" is the RDN of entry "parent". The RDN can thus be used to navigate from a parent entry to a child entry.

Each entry in the DIT is globally uniquely identified by a Distinguished Name (DN), which comprises the DN of its parent concatenated with its own RDN. Thus, in the example of Figure 3 the DN of the childA entry is "rdnPrefix, rdnParent, rdnChildA". Note that this assumes that the 'prefix' entry is a child of the root entry of the DIT. The root entry has no parent entry, and therefore no RDN, and may be identified by an empty DN.

A postal address may be considered as an analogy. To deliver a letter using the given address the town, the street within that town, and then the house within that street are resolved in turn. The address may be considered a DN, and each component of the address (town, street, house) are each considered an RDN.

The X.500 name resolution procedure follows the path represented by a DN, starting at the root entry and across DSAs if necessary, until the entry identified by the DN is encountered. In Figure 4 the DIT entries are shown with hatching. Figure 4 also shows the DSEs that support the example DIT subtree, and these are shown without hatching. It will be appreciated that in this example the DSEs are named in the same way as the DIT entries to which they are associated.

Two common attributes of the DSEs that are used by the X.500 name resolution procedure (in addition to the RDN attributes), are as follows. The first of the attributes ("dseType") is part of all DSEs and it identifies the type of the DSE. For clarity, the values of the dseType in Figure 4 are simplified (compared to that specified by X.500). The second attribute (ap) is optional and identifies an access point (i.e. another DSA) which may be able to continue the name resolution procedure.

The dseType attribute has value "entry" if the DSE also contains the attributes of the associated DIT entry, and thus can service directory operation requests on that entry. In this case the DSA is said to "master" the DIT entry. See for example DSE 410 which is of type "entry".

The dseType attribute has value 'immSupr' (immediate superior reference) or 'subr' (subordinate reference) if the ap attribute identifies a DSA which has a DSE with the same DN and whose dseType has value "entry". The former reference type is used at an upwards boundary (i.e. towards the root), and the latter reference type is used at a downwards boundary (i.e. towards the leaves of the tree). See for example DSE 412 which is of type "subr". The ap is "DSA-B", which shows that the equivalent DSE of type "entry" is to be found in DSA-B. This is DSE 405 in Figure 4. There is a third reference type, 'xref' (cross reference), which is used for a reference which is not part of the hierarchy.

The dseType attribute has value 'glue' if the DSE contains only the RDN attributes - in effect it is a placeholder in the tree. The glue DSEs are required to allow each DSA to store knowledge of the complete DNs of all of the DSEs that it holds. Thus for any DSE held by a DSA, the parent DSE will also be held by that DSA. See for example DSE 414, which is of type "glue".

The name resolution procedure can start at any DSA supporting the DIT, and can successfully resolve any valid DN in the DIT; completing at a DSA that has a DSE with that DN and with dseType "entry".

When the name resolution procedure is invoked at a given DSA it will attempt to resolve as much of the DN locally as it can. This may be considered moving along the path described by the DN until a DSE is reached having no child with an RDN which is the next to be matched.

If the DN is fully resolved and the DSE has type 'entry', the name resolution procedure is complete and the entry can be operated upon. If, however, the DSE has dseType 'subr' or 'immSupr', the name resolution procedure is invoked on the DSA identified by the value of the ap attribute. This is achieved by forwarding (chaining) the operation to that DSA.

If the DN is not fully resolved and the last resolved DSE has dseType "entry", the name resolution procedure is complete and the target entry of the operation does not exist. If the DSE has dseType 'subr' or 'immSupr', as above the operation is chained to that DSA.

For example, at DSA-A 402, "rdnPrefix, rdnParent, rdnChildA" is partially resolved to"rdnPrefix, rdnParent", and that DSE is of type 'subr' and so the operation is chained to the DSA referenced by the ap attribute - i.e. DSA-B 404.

At DSA-B 404, "rdnPrefix, rdnParent, rdnChildA" is fully resolved, and that DSE is of type "subr" (see DSE 416) and so the operation is once again chained to the DSA referenced by the ap attribute - i.e. DSA-C 408.

At DSA-C 408, "rdnPrefix, rdnParent, rdnChildA" is fully resolved, and that DSE is of type "entry" (see DSE 418), so that the name resolution procedure is complete.

When an entry is to be added to the DIT, the operation is considered to be on the parent of the entry (at least for the purposes of name resolution). On completion of name resolution, if the entry to be added is to be collocated with its parent, a DSE subordinate to the resolved DSE is created by the resolving DSA with RDN of the new entry, and dseType "entry". If the entry to be added is to be located on a different DSA, a DSE subordinate to the resolved DSE is created by the resolving DSA with RDN of the new entry, and dseType "subr". The other DSA is instructed to create the DSE which represents the new entry (dseType "entry"). If they don't already exist, that second DSA will create additional DSEs for the other RDNs in the name.

A new DIT entry can be mastered on any DSA, in principle allowing any possible mapping of DIT entries onto DSAs.

A difficulty may arise where the number of DSEs required to be held in one or more of the DSAs would be greater than the physical capacity of those DSAs. In such a situation it may not be possible to map the DIT on to the DSAs.

As discussed above, a new DIT entry can in theory be entered in to any DSA in the DIT. In an extreme example, this could mean every entry in the DIT is mastered by a different DSA. Therefore, for a given maximum capacity of DSA, any DIT can in principle be supported by increasing the number of DSAs and mapping the DIT across those DSAs. In practice however this is not always the case because the DSAs have to be able to store all of the DSEs necessary for name resolution as described above.

The difficulty arises where a single parent entry has a large number of child entries. The child entries themselves can be mastered on multiple DSAs, but all of the subordinate reference entries must be stored by the DSA which is mastering the parent entry. This may represent a limit to scalability since for a given capacity of DSA, there will be a maximum number of child entries that are possible for a single parent entry.

An example data model is where all instances of a key type are collected as children of a single parent "container" entry. In the case of mobile networks such key types might include MSISDN or IMSI. The number of instances of such keys could be tens of millions, and in the future potentially hundreds of millions or more. It may be difficult for current DIT architecture to support such instances.

One option is to increase the capacity of the DSAs until it is possible to store all of the DSEs that are necessary to support the DIT. However this may lead to an increase in costs, and there may still be physical limits as to what is feasible.

Another option is to change the DIT, and spread the set of key values across multiple parents. For direct access, this requires clients to have more knowledge about the DIT - the parent object of a given key value must be known or derivable. Alternatively, the location of the key value can be obtained via a search, but in many cases (particularly where the key value is used to access a sub-tree of entries), this requires an extra directory operation, which, because it is an additional complete round trip, may significantly increase latency. In addition the indirect search operation used to locate the key may either be slow, or require the DSA to devote additional resources to extra indices for fast location of the key.

Figure 5 shows an embodiment of a directory 500 comprising DSA-A 502, DSA-B 504, DSA-B' 504', DSA-C 506, and DSA-D 507.

The parent entry 550 has a prefix entry 552. Associated with the parent entry are child entries 554 (Child A), 556 (Child B), and 558 (Child C). The child entries are distributed across the DSAs. In this case Child A 554 is located in DSA-C 506, and Child B 556 and Child C 558 are located in DSA-D 507. That is the subordinate reference DSEs for the parent are partitioned over two or more DSAs.

The parent entry 550 is located in both DSA-B 504 and DSA-B 504', which is represented in Figure 5 by the overlapping regions of DSA-B and DSA-B'.

The DSEs 560 and 560' representing the parent entry 550 comprise changeable attributes, or in other words attributes which can be modified. In embodiments, the modification of the attribute value takes place in response to an invocation of the name resolution procedure. The modification may be temporary. In some embodiments the modification is temporary and is tailored to a particular name resolution request. Some embodiments therefore provide attribute values that can be dynamically adjusted during the name resolution process. The modified value may be different each time a name resolution request is made. The DSEs (and their attributes) may therefore be considered dynamic.

In existing X.500 systems the values of the dseType and ap attributes are fixed when used by the name resolution process, but may be changed by some other agency outside of the name resolution process (in which case the updated value would be subsequently used by the name resolution process).

It will be understood that embodiments may enable both the modification of attributes in response to a name resolution request (which modification may be temporary), and the updating of attributes and values as per the existing X.500 protocol if required.

In the embodiment of Figure 5 the value of the "dseType" attribute comprises the function f(dn), and the values of the "ap" attribute comprises the function g(dn), where dn is the distinguished name that is being resolved by the name resolution process. Therefore in embodiments the DSE entries comprise dynamic values (f(dn) and g(dn)), the dynamic values being modified in response to a name resolution request.. As part of a name resolution request it is a DSE (having a given DN) which is located, by resolving that DN. In embodiments the values of dseType: f(dn) and ap: g(dn) are computed as name resolution occurs e.g. utilising a particular DN.

In embodiments, when a DIT entry is being added which is represented by a DSE that is subordinate to the dynamic DSE, the values of the dseType and ap attributes will be the same as they will be in subsequent operations where the name of that entry is being resolved in order to locate it. Thus those subsequent resolution operations will follow the same chaining steps (between DSAs) as did the original "add" entry operation.

The dynamic DSEs may be located in all DSAs that hold some of the partitioned set of child subordinate references i.e. the DSAs that collectively master the parent entry. In the example of Figure 5, the dynamic DSEs 560 and 560' are respectively located in DSA-B 504 and DSA-B 504'..

If, during name resolution, the DSA is not the one that holds the necessary subordinate reference DSE, but does hold the dynamic DSE representing the parent entry, the values of the dseType and ap attributes of the DSE will be modified such that the operation is directly chained to the DSA that does hold the necessary subordinate reference DSE. This allows name resolution to continue to completion, similar to if the complete set of subordinate reference DSEs are held in a single DSA.

When an entry is added to the DIT that involves the creation of a child subordinate reference DSE, the values of the dseType and ap attributes of the DSE representing the parent entry will be changeable such that the operation is directly chained to the DSA that should hold the necessary child subordinate reference DSE, and is correctly added to the dataset of that DSA.

Referring still to Figure 5, the additional DSA (DSA-B' 504') shares the set of subordinate reference DSEs subordinate to the "parent" entry with DSA-B 504. The computed values of the dseType and ap attributes are shown as functions (f and g) which map the DN or RDN that is being resolved onto the values of the attributes.

For a given DSA that is performing name resolution, if the subordinate reference DSE is stored locally the dseType function (f) returns a value of 'entry', and the ap function (g) returns a value of 'null' which means attribute ap does not exist. If the subordinate reference DSE is not stored locally (e.g. is stored in another DSA), the dseType function (f) returns a value of 'xref', and the ap function (g) returns a value which identifies the DSA that does store that DSE.

For the embodiment of Figure 5, Table 1 and Table 2 below summarise the values to be returned by the f and g functions when part of the name resolution procedure is invoked on DSA-B 504 and DSA-B' 504' respectively. The first column shows the prefix of the DN - any DN being resolved with that prefix should result in the values shown in columns 2 and 3.

**Table 1**

| **DSA-B** | | |
|---|---|---|
| **DN prefix** | **dseType = f(DN)** | **ap = g(DN)** |
| rdnPrefix,rdnParent,rdnChildA | entry | null |
| rdnPrefix,rdnParent,rdnChildB | entry | null |
| rdnPrefix,rdnParent,rdnChildC | xref | DSA-B' |

**Table 2**

| **DSA-B'** | | |
|---|---|---|
| **DN prefix** | **dseType = f(DN)** | **ap = g(DN)** |
| rdnPrefix,rdnParent,rdnChildA | xref | DSA-B |
| rdnPrefix,rdnParent,rdnChildB | xref | DSA-B |
| rdnPrefix,rdnParent,rdnChildC | entry | null |

For DSA-B 504, "rdnPrefix, rdnParent, rdnChildA" is fully resolved (i.e. all of the information required to locate child A is within DSA-B 504), and that DSE is of type 'subr' and so the operation is chained to the DSA referenced by the ap attribute - i.e. DSA-C 506, which as can be seen from Figure 5 is where child A 554 is located.

Also, as can be appreciated from Figure 5, at DSA B 504, "rdnPrefix, rdnParent, rdnChildC" is partially resolved to "rdnPrefix, rdnParent", and so as can be appreciated from Table 1 that DSE is of type 'xref' and so the operation is chained to the DSA referenced by the ap attribute - i.e. DSA-B'. DSA-B' can fully resolve the DN i.e. it holds a DSE which has an RDN "rdnChildC", and which is a child of the DSE "rdnPrefix, rdnParent".

Also as shown in Figure 5 at DSA B', "rdnPrefix, rdnParent, rdnChildA" is partially resolved to"rdnPrefix, rdnParent", and so as shown in Table 2 that DSE is of type 'xref' and so the operation is chained to the DSA referenced by the ap attribute - i.e. DSA-B.

Also as shown in Figure 5, at DSA-B', "rdnPrefix, rdnParent, rdnChildC" is fully resolved, and that DSE is of type 'subr' and so the operation is chained to the DSA referenced by the ap attribute - i.e. DSA-D.

It can therefore be appreciated that any of the child entry DNs can be correctly resolved to its mastering DSA.

Some embodiments enable entries to be added when building the DIT.

Consider a case of adding entry "rdnPrefix, rdnParent, rdnChildB". As previously noted, when an entry is to be added, the name that is resolved is that of the parent entry. At DSA-B, "rdnPrefix, rdnParent" is fully resolved, and the DSE is of type "entry" and so the "add" operation is handled by that DSA. The target DSA for "rdnPrefix, rdnParent, rdnChildB" is DSA-D (since in the embodiment of Figure 5 DSA-D is where Child B is located), and so DSA-B creates and stores a child DSE of "rdnPrefix, rdnParent" with rdn "rdn childB", dseType "subr" and "ap" with value DSA-D.

As shown in Figure 5, "rdnPrefix, rdnParent" is fully resolved at both DSA-B and DSA-B', to DSEs labelled 560 and 560' respectively. In both DSAs, the attributes of the DSEs are shown as "dseType: f(dn)" and "ap: g(dn)". Therefore reference needs to be made to Table 1 (for DSA-B) or Table 2 (for DSA-B') to get the values used by name resolution.

When adding "rdnPrefix, rdnParent, rdnChildB", for example, the values to use are those given in the second row of Table 1 and Table 2. For DSA-B those values are "entry" for dseType and "null" for ap. For DSA-B' the values are "xref" for dseType and "DSA-B" for ap.

In some embodiments, the dynamic values of the dseType and ap type attributes can be used at the other DSAs supporting the DIT. For example referring to Figure 5 these dynamic values could also be used at DSA-A 502, DSA-C 506, and DSA-D 507. This may provide optimal chaining in that those DSAs will chain directly to the DSA which holds the child subordinate reference DSE, and thus may avoid an extra chaining step.

The functions that compute the values of the dseType and ap attributes from the target DN are discussed in more detail below.

For a given parent, the only variable within the DN is the RDN of a child, and therefore the RDN must be consistently mapped to the correct DSA in order to derive the value of the ap attribute. A hash of the RDN to give a numbered DSA identifier is one example of how this could be achieved. A hash table may be used to store the associations. The value of the dseType can then be derived from the DSA identifier. In Table 1 and Table 2 above, if the identified DSA is the local DSA, the dseType takes value "entry" and otherwise takes value "xref".

The DN of the parent entry may also be significant since the child subordinate reference DSEs of more than one parent entry may require partitioning across the same set of DSAs. In such cases use of the parent DN allows two or more child entries with the same RDN (but different parents) to be located independently.

When the DIT is built, the computed value of the ap selects the DSA on which the child subordinate reference DSE will be located. This means that the hash function does not have to take account of an externally selected distribution of the DSEs - it may instead carry out its own selection.

In some embodiments the distribution of the DSEs can be managed by an external agency - for example to ensure an even distribution of DSEs across the DSAs, or alternatively to ensure an uneven distribution across DSAs that have uneven capacities and/or capabilities.

The approach used may add an extra level of indirection between the hashed RDN and the DSA identifier. The number of possible results of the RDN hash function could be significantly greater than the number of DSAs to be identified. This may increase flexibility. A mapping table may be used to map each possible hash result value to a DSA identifier. The number of hash results mapping to a given DSA can be tuned so that the DSA stores a desired fraction of the total population of child subordinate entry DSEs. For optimum results the hash function could have a flat distribution. In such a case each of the possible result values should have equal probability given any population of RDNs to be hashed.

The size of the mapping table (i.e. the number of possible hash result values) may be configured such that the smallest desired number of DSEs on a single DSA can be configured. For example, assuming that the maximum population of DSEs to be supported is 1,000,000,000 and the smallest population on a single DSA is 10,000, a mapping table size of 100,000 would be required.

In some embodiments, a mapping table per parent entry can allow different mapping for the different populations of child subordinate entry DSEs.

In some embodiments the mapping table can be configured manually (if small enough). In other embodiments the mapping table can be configured automatically, based on policy.

Embodiments using the mapping table approach may allow evolution of the DIT and of the deployment DSAs that are supporting the DIT. For example as the number of child subordinate reference DSEs increases, additional DSAs may have to be added to the deployment. This can be accommodated by the remapping of a subset of the hash values to the newly added DSA(s).

Remapping may require changing the value of the DSA in the mapping table, and may also require moving the underlying DSEs to the new DSA. For a live deployment this may be done with no loss of service, so that successful name resolution is possible throughout the process.

The remapping of a single hash value to a new DSA may be considered by way of example. A number (possibly reasonably large) of DSEs may have to be moved from a donor DSA to a recipient DSA. Before the remapping, all DSAs have the ap (access point) value for the hash value set to the donor DSA, and the donor DSA dataset includes 'subr' DSEs for all of RDNs that hash to that value. After relocation, all DSAs have the ap (access point) value for the hash value set to the recipient DSA, and the recipient DSA dataset includes 'subr' DSEs for all of the RDNs that hash to that value.

Thus to relocate a page from a donor to a recipient DSA, at least the following may happen:
- remap hash value. The ap value for that hash value is updated to reference the recipient DSA in all DSAs;
- move DSEs. The subr DSEs are created in the recipient DSA and should be deleted from the donor DSA.

The remapping of the hash value may take place very quickly - a distributed update of a single value may happen within milliseconds (subject to WAN latency), even across a large number of DSAs. However, the moving of the DSEs may take a reasonable amount of time, which may be enough time to cause a significant number of directory operation failures unless properly dealt with.

Even though the remapping of the hash value is likely to be fast, in some embodiments it may involve multiple processing entities. Where the starting point is that all DSEs exist at a donor DSA, service can be maintained as long as chaining always includes the donor. Non donor/recipient DSAs may initially chain to the donor, but then chain to the recipient when their configured ap value is updated. To ensure onward chaining to the donor, the recipient configuration must therefore be updated before any third party DSA.

In the case of an "add" entry operation, the recipient DSA may add the DSE locally as soon as it has been updated. This may help to ensure that the recipient is involved in the name resolution as soon as its configuration is updated. This may be achieved by updating the donor before the recipient.

In summary, ordering for the distributed updates to achieve remapping of the hash value may be as follows:
- donor
- recipient
- other DSAs

The ordering for the "other DSAs" may not be important.

Moving the DSEs themselves from donor to recipient may in some embodiments be a bulk operation, potentially involving a large amount of data. To guarantee service, two copies of a DSE may be used, rather than none. This means a DSE being moved should be created on the recipient DSA before it is deleted from the donor DSA.

Whilst the DSE "move" operation is in process, any one DSE may exist at either DSA (or both). For name resolution to work correctly, both donor and recipient DSAs may have to be involved. If an operation is chained to the donor and the DSE has already been moved, the ap for the hash value may be set to the recipient, and therefore the operation will be chained to the DSA that can successfully progress the name resolution. If, however, the operation is chained first to the recipient and the DSE has not yet been moved, the ap for the hash value may not be correct for the operation to be chained to the donor DSA. In order for the name resolution to work in this case the dseType and ap value computation functions (f and g) may exhibit additional behaviour. During the move process the value of ap should be the identity of the donor DSA (and the dseType should be 'xref'), if the donor DSA has not already taken part in name resolution. If the donor DSA has already been involved, the computed attribute values should be "null" and "entry" respectively.

If sufficient storage is available, the number of chaining steps involved by a DSA retaining subr DSEs which are "owned" by another DSA may be optimized. Since the X.500 name resolution procedure always attempts to locally resolve as much of the DN as possible, if a DSE subr exists in a DSA it will be used, even if according to the partitioning, that DSE should only exist in another DSA. Retaining such DSEs may avoid the extra chaining step that would otherwise be necessary.

Extra DSEs can be retained, for example, as part of the page relocation described above, so that the DSE is not deleted from the donor DSA. Alternatively, such DSEs can be created as a cache by examining the results of chained operations. The cache may be managed so that the most commonly used references are those that are retained when the cache becomes full.

In some embodiments the additional subr DSEs are not maintained by the normal X.500 features, in particular the DOP. Instead, if the referenced entry no longer exists or has been renamed, the chained operation may fail with a "no such entry", and at this point the subr DSE can be deleted.

Some embodiments may therefore enable a mechanism to allow expansion of an X.500 directory system where data references can be moved in real time while maintaining service availability. Embodiments may enable dynamic generation of subordinate references based on the unique identifier of a database object. Embodiments may also enable the migration of references in a live database while maintaining data availability.

Some embodiments may help maintain deterministic response times, which may entail a relatively small increase in latency.

Embodiments may also enable the evolution of the population of keys within the DIT, and the deployment that is hosting the DIT, by supporting on-line re-partitioning of the DSEs.

Furthermore, the embodiments may enable a single parent entry to have more child entries than the capacity of a single DSA would allow. This may enable a larger number of keys (IMSI or MSISDN) than is currently possible.

An appropriately adapted computer program code product or products may be used for implementing the embodiments, when loaded on an appropriate data processing apparatus, for example for determining geographical boundary based operations and/or other control operations. The program code product for providing the operation may be stored on, provided and embodied by means of an appropriate carrier medium. An appropriate computer program can be embodied on a computer readable record medium. A possibility is to download the program code product via a data network. In general, the various embodiments may be implemented in hardware or special purpose circuits, software, logic or any combination thereof. Embodiments of the inventions may thus be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

It is also noted herein that while the above describes exemplifying embodiments of the invention, there are several variations and modifications which may be made to the disclosed solution without departing from the scope of the present invention.

## Claims

1. A method comprising:
providing an association in a data directory, said association for locating data in said data directory; and
modifying said association in response to a request for data from said directory, to provide a modified association.

2. A method as set forth in claim 1, wherein said association comprises at least one attribute.

3. A method as set forth in claim 1 or claim 2, wherein said association comprises at least one value.

4. A method as set forth in any preceding claim, wherein said modification of said association is temporary.

5. A method as set forth in any preceding claim, wherein said modified association is determined using an identifier of said requested data.

6. A method as set forth in claim 5, wherein said identifier comprises a Distinguished Name of said data to be located.

7. A method as set forth in any preceding claim, comprising adding data to a location in said directory.

8. A method as set forth in any preceding claim, comprising moving data from a first location in said directory to a second location in said directory.

9. A method as set forth in any preceding claim, comprising using said modified association to obtain said requested data.

10. A method as set forth in any preceding claim, wherein said directory comprises an X.500 Directory.

11. A method as set forth in any preceding claim, wherein said association is between a parent entry and a child entry in said directory.

12. A method as set forth in any preceding claim, wherein said directory comprises a plurality of Directory System Agents.

13. A method as set forth in claim 12, wherein said association is partitioned over at least two of said Directory System Agents.

14. A method as set forth in any preceding claim, wherein said association comprises a Directory System Agent Specific Entry.

15. A computer program comprising computer executable instructions which when run on one or more processors perform the method of any of claims 1 to 14.

16. An apparatus comprising:
at least one processor;
and at least one memory including computer program code;
the at least one memory and the computer program code configured to, with the at least one processor, cause the apparatus at least to:
provide an association in a data directory, said association for locating data in said data directory; and
modify said association in response to a request for data from said directory, to provide a modified association.

17. An apparatus as set forth in claim 16, wherein said association comprises at least one attribute.

18. An apparatus as set forth in claim 16 or claim 17, wherein said association comprises at least one value.

19. An apparatus as set forth in any of claims 16 to 18, wherein said apparatus is configured to temporarily modify said association.

20. An apparatus as set forth in any of claims 16 to 19, wherein said apparatus is configured to use an identifier of said requested data to determine said modified association.

21. An apparatus as set forth in claim 20, wherein said identifier comprises a Distinguished Name of said data to be located.

22. An apparatus as set forth in any of claims 16 to 21, wherein said apparatus is configured to add data to a location in said directory.

23. An apparatus as set forth in any of claims 16 to 22, wherein the apparatus is configured to move data from a first location in said directory to a second location in said directory.

24. An apparatus as set forth in any of claims 16 to 23, wherein the apparatus is configured to use said modified association to obtain said requested data.

25. An apparatus as set forth in any of claims 16 to 24, wherein said directory comprises an X.500 Directory.

26. An apparatus as set forth in any of claims 16 to 25, wherein said association is between a parent entry and a child entry in said directory.

27. An apparatus as set forth in any of claims 16 to 26, wherein said directory comprises a plurality of Directory System Agents.

28. An apparatus as set forth in claim 27, wherein said apparatus is configured to partition said association over at least two of said Directory System Agents.

29. An apparatus as set forth in any of claims 16 to 28, wherein said association comprises a Directory System Agent Specific Entry.

## Amended claims

### Amended claims in accordance with Rule 137(2) EPC.

1. A method comprising, in a network apparatus:
providing an association in a data directory, said association for locating data in said data directory;
deriving said association in response to a request for data from said directory by using an identifier in said request as an input to said derivation;
computing dynamic values of attributes based on a target distinguished name uniquely identifying an entry in a directory structure, wherein an attribute comprises information making up the entry, wherein the target distinguished name is a part of the request.

2. A method as set forth in claim 1, wherein said association comprises at least one attribute.

3. A method as set forth in claim 1 or claim 2, wherein said association comprises at least one value.

4. A method as set forth in any preceding claim, wherein the derived association is temporary.

5. A method as set forth in any preceding claim, comprising adding data to a location, modify data at the location or delete data at the location in said directory.

6. A method as set forth in any preceding claim, comprising moving data from a first location in said directory to a second location in said directory.

7. A method as set forth in any preceding claim, comprising using the derived association to obtain said requested data.

8. A method as set forth in any preceding claim, wherein said directory comprises an X.500 directory.

9. A method as set forth in any preceding claim, wherein said association is between a parent entry and a child entry in said directory such that attributes of the entry uniquely identify the child entry relative to the parent entry in a directory structure.

10. A method as set forth in any preceding claim, wherein said directory comprises a plurality of directory system agents configured for centralized storage of information.

11. A method as set forth in claim 10, wherein said association is partitioned over at least two of said directory system agents.

12. A method as set forth in any preceding claim, wherein said association comprises a directory system agent specific entry, a directory system agent being configured for centralized storage of information.

13. A computer program comprising computer executable instructions which when run on one or more processors perform the method of any of claims 1 to 12.

14. An apparatus comprising:
at least one processor;
and at least one memory including computer program code;
the at least one memory and the computer program code configured to, with the at least one processor, cause the apparatus at least to:
provide an association in a data directory, said association for locating data in said data directory;
derive said association in response to a request for data from said directory by using an identifier in said request as an input to said derivation;
compute dynamic values of attributes based on a target distinguished name uniquely identifying an entry in a directory structure, wherein an attribute comprises information making up the entry, wherein the target distinguished name is a part of the request.

15. An apparatus as set forth in claim 14, wherein said association comprises at least one attribute.

16. An apparatus as set forth in claim 14 or claim 15, wherein said association comprises at least one value.

17. An apparatus as set forth in any of claims 14 to 16, wherein said apparatus is configured to derive a temporary association.

18. An apparatus as set forth in any of claims 14 to 17, wherein said apparatus is configured to add data to a location, modify data at the location or delete data at the location in said directory.

19. An apparatus as set forth in any of claims 14 to 18, wherein the apparatus is configured to move data from a first location in said directory to a second location in said directory.

20. An apparatus as set forth in any of claims 14 to 19, wherein the apparatus is configured to use the derived association to obtain said requested data.

21. An apparatus as set forth in any of claims 14 to 20, wherein said directory comprises an X.500 directory.

22. An apparatus as set forth in any of claims 14 to 21, wherein said association is between a parent entry and a child entry in said directory such that attributes of the entry uniquely identify the child entry relative to the parent entry in a directory structure.

23. An apparatus as set forth in any of claims 14 to 22, wherein said directory comprises a plurality of directory system agents configured for centralized storage of information.

24. An apparatus as set forth in claim 23, wherein said apparatus is configured to partition said association over at least two of said directory system agents.

25. An apparatus as set forth in any of claims 14 to 24, wherein said association comprises a directory system agent specific entry, a directory system agent being configured for centralized storage of information.
